# EUROPEAN PATENT APPLICATION

(11) **EP 4 603 699 A1**
(43) Date of publication of application: **20.08.2025**
(21) Application number: 24168888.6
(22) Date of filing: 08.04.2024
(51) Int. Cl.: F03D 80/30

(54) **LIGHTNING PROTECTION ASSEMBLY FOR A ROTOR BLADE**

(30) Priority: 16.02.2024 EP 24382153
(71) Applicant: Siemens Gamesa Renewable Energy Innovation & Technology S.L., 31621 Sarriguren (Navarra) (ES)
(72) Inventor: March Nomen, Victor, 08195 Sant Cugat del Valles (ES)
(74) Representative: SGRE-Association

(57) **Abstract**

A lightning protection assembly for a rotor blade (1) of a wind turbine is provided. The lightning protection assembly (100) comprises a carbon structure (110) extending in a longitudinal direction of the rotor blade (1) for strengthening the rotor blade (1), a conductive element (120, 130); and a potential equalization assembly (121, 131) comprising at least respective first and second conductor bonding elements (122, 132) each configured to electrically couple the conductive element (120, 130) to the carbon structure (110). A longitudinal section of the conductive element (120, 130) extends in a longitudinal direction of the blade (1) between the first and second conductor bonding elements (122, 132). The longitudinal section of the conductive element (120, 130) extends in a longitudinal direction along at least a portion of the carbon structure (110). The conductive element (120, 130) is spaced apart from the carbon structure (110) in a surface direction (S1) parallel to a surface of the rotor blade (1) and/or in a thickness direction (S2) perpendicular to the surface of the rotor blade (1).

## Description

### FIELD OF THE INVENTION

The present invention relates to a lightning protection assembly for a rotor blade of a wind turbine. It further relates to a wind turbine rotor blade and a method of providing a lightning protection assembly.

### BACKGROUND

Wind turbines are placed in various landscapes and environments. However, they often share the same characteristic of being the highest point in the area. Consequently, they are vulnerable to lightning strikes during thunderstorms. The rotor blades of a wind turbine are especially susceptible to lightning strikes since they take on the highest point during rotation. To prevent damage caused by lightning strikes, lightning protection systems are installed on the rotor blades of wind turbines.

In recent years, rotor blade spans have increased considerably, requiring the use of carbon fiber reinforcing structures to meet structural requirements. However, these carbon fiber reinforcing structures are conductive, thus also altering the conductive properties of the rotor blade significantly. As lightning receptors are typically only located near the rotor blade tip, the carbon fiber reinforcing structures are vulnerable to direct strikes since they are almost as long as the rotor blade itself. This may result in direct lightning strikes to the carbon fiber reinforcing structure and thus a damage to the rotor blade. If the rotor blade is damaged by a lightning strike, an up-tower repair or a down-tower repair or, in extreme cases, a complete replacement of the rotor blade is necessary, which increases the maintenance costs and the downtime of the wind turbine. It is thus desirable to avoid these negative effects.

### SUMMARY

Accordingly, there is a need to mitigate at least some of the drawbacks mentioned above, in particular to avoid direct lightning strikes to the carbon fiber reinforcing element of the rotor blade.

This need is met by the features of the independent claims. The dependent claims describe embodiments of the invention.

According to an aspect of the present invention, a lightning protection assembly for a rotor blade of a wind turbine is provided. The lightning protection assembly comprises a carbon structure extending in a longitudinal direction of the rotor blade for strengthening the rotor blade, a conductive element, and a potential equalization assembly comprising at least respective first and second conductor bonding elements each configured to electrically couple the conductive element to the carbon structure. A longitudinal section of the conductive element extends in a longitudinal direction of the blade between the first and second conductor bonding elements. The longitudinal section of the conductive element extends in a longitudinal direction along at least a portion of the carbon structure. In a profile section of the rotor blade, the conductive element is configured to be spaced apart from the carbon structure in a surface direction parallel to a surface of the rotor blade and/or in a thickness direction perpendicular to the surface of the rotor blade.

Using such a lightning protection assembly for protecting the rotor blade of a wind turbine may provide several advantages. By using such a lightning protection assembly, the probability of direct lightning strikes to the carbon structure may be reduced significantly. In particular, the conductive element may attract lightning strike so that lightning attaches to the conductive element rather than to the carbon structure. Accordingly, damage of the rotor blade due to lightning strikes may be mitigated. The integration of the conductive element may increase the likelihood that lightning will strike this element rather than the carbon structure. The potential between the carbon structure and the conductive elements may be equalized by the potential equalization assembly. Further, by providing a spacing of the conductive element in the surface and/or the thickness directions to the carbon structure, an electrical insulation may be achieved. A flashover from the conductive element to the carbon structure after the conductive element has been struck by lightning may thus be prevented. This may provide further protection from damage by lightning strike. The conductive element may provide a parallel conductor to the carbon structure which runs along the blade parallel to the carbon structure.

The conductive element and the potential equalization assembly may be a first conductive element and a first potential equalization assembly, respectively. In an embodiment, the lightning protection assembly further comprises a second conductive element and a second potential equalization assembly comprising at least respective first and second conductor bonding elements configured to electrically couple the second conductive element to the carbon structure. A second longitudinal section of the second conductive element may extend in a longitudinal direction of the blade between these first and second conductor bonding elements. The second longitudinal section of the second conductive element may extend in the longitudinal direction at least along the same portion of the carbon structure as the first longitudinal section of the first conductive element. The first longitudinal section and the second longitudinal section may be spaced apart in the surface direction and the carbon structure may in surface direction be arranged between the first and second longitudinal sections. The second conductive element may be spaced apart from the carbon structure in the surface direction and/or in the thickness direction. The first and second conductive elements may essentially form a Faraday cage around the carbon structure so that lightning is attracted to the first and second conductive elements rather than to the carbon structure. Protection of the carbon structure from direct lightning strike may thus be further improved.

The description of the conductive element and the potential equalization assembly provided below may apply to both the first and the second conductive elements and the first and the second potential equalization assemblies. These may have a similar (or the same) configuration.

The carbon structure may be a carbon fiber structure. It may comprise pultruded carbon planks.

In an example, the conductive element may comprise a metal mesh, e.g. a copper mesh. By using a copper mesh, a larger area of the rotor blade may be covered with the conductive element while maintaining a low weight. In addition, since copper comprises a high conductivity, it may be possible to effectively conduct the lightning current. Furthermore, the first and second conductor bonding elements of the potential equalization assembly may comprise a metal mesh, e.g. a copper mesh.

In an example, the distance in the surface direction between the conductive element and the carbon fiber element may be at least 50 mm. The distance in surface direction may for example be between 50 mm and 1000 mm. It may be smaller than 0.7 or 0.5 m. The distance may change along the longitudinal direction of the carbon structure.

In an embodiment, the conductor bonding element of the potential equalization assembly may be directly connected to the carbon structure and/or to the conductive element. This may allow an equalization of the potential between the conductive element and the carbon structure directly and thus efficiently.

In another embodiment, the potential equalization assembly may couple the conductive element via the conductor bonding element indirectly to the carbon structure, e.g. by coupling via a lightning conductor and a carbon structure bonding element. By adding a carbon structure bonding element to indirectly couple conductive element, a good electrical connection to the carbon structure may be achieved and the risk of flashovers and damage may be further reduced.

In an embodiment, the carbon structure is or comprises a beam, in particular a carbon spar cap or a spar. As spar caps or spars are commonly used to reinforce the rotor blades of wind turbines, this allows an easy implementation of the lightning protection assembly in an already existing rotor blade setup. The lightning protection assembly may be a carbon spar cap assembly.

In an embodiment, the portion of the carbon structure along which the longitudinal section at least extends is a tip end portion having a tip end that is directed towards a tip of the rotor blade. By extending the section of the conductive element at least over the tip end portion of the carbon structure, the most vulnerable region at the tip end, at which the probability of a lightning strike is high, may be protected from direct lightning strikes. The tip end portion may have a length in longitudinal direction of between 5% and 40%, or between 5% and 30%, of the length of the blade. It may for example have a length between 5 m and 50 m, e.g. between 10 m and 40 m, e.g. about 30 m for a 120 m blade.

The longitudinal section may extend further towards the tip of the blade than the tip end of the carbon structure. The distance between the tip end of the carbon structure and the tip end of longitudinal section may be between 1 m and 5 m, e.g. 3 m. By extending the longitudinal section even further than the tip end of the carbon structure, the protection may further be improved.

The rotor blade may have a length in longitudinal direction of at least 50m, preferably at least 80m or at least 100m. The length may be between 50 m and 150 m, e.g. between 80 and 150 m. The tip end of the carbon structure may be spaced apart from the tip of the rotor blade by between 5 m and 15 m, e.g. by between 8 m and 12 m.

In an embodiment, the potential equalization assembly comprises at least three conductor bonding elements in a tip section of the blade that includes a tip end portion of the carbon structure. The tip section of the blade may for example include less than 35%, e.g. less than 30% or 25%, of the length of the blade measured from the tip of the blade.

As at the tip end, the rotor blade is much narrower than in the intermediate part, the conductive elements may not comprise the same distance to the carbon structure in the surface direction (and thus a different insulation voltage). By including more than two conductor bonding elements in the tip region, the electric potential between the conductive elements and the carbon structure may be equalized more effectively. This may allow to reduce the expected voltage difference that may occur between the conductive elements and the carbon structure. As a result, the reduced insulation at the tip end due to a reduced distance between the conductive elements and the carbon structure may not increase the risk of flashovers.

In an embodiment, the carbon structure comprises a tapered portion at the tip end, wherein the longitudinal section of the conductive element extends at least along the tapered portion of the carbon structure. By extending the longitudinal section at least over this tapered region, the risk of damage in this more vulnerable region may be reduced.

The carbon structure may further comprise a tapered portion at a root end. A longitudinal extension of the tapered potion at the tip end may be larger than a longitudinal extension of the tapered potion at the root end.

In an example, the carbon structure may comprise a plurality of pultruded planks, which may form a stack. The ends of the planks may be chamfered and/or may be cut straight. In the respective tapered portion, the number of layers of carbon pultruded planks may reduce gradually.

In an embodiment, at each longitudinal position of the longitudinal section of the conductive element, the conductive element may have a minimum distance to the carbon structure, wherein the minimum distance may be selected such that an insulating voltage between the conductive element and the carbon structure is higher than an expected voltage difference at the respective longitudinal position between the conductive element and the carbon structure due to a lightning strike to the conductive element. By having a minimum distance such that the insulating voltage is higher than an expected voltage difference, the risks of flashovers occurring between the conductive element and the carbon structure may be reduced. The minimum distance between the conductive element and the carbon structure may be determined by the spacing in surface direction and the spacing in thickness direction perpendicular to the surface of the blade.

The expected voltage may be determined by using a model, such as a numerical model. The model may include the conductive properties of the blade for the respective arrangement of the carbon structure, the conductive element(s) and the potential equalization assembly(ies). It may also include properties associated with the environmental conditions in which the wind turbine is located and associated lightning strike characteristics that may occur in this region. It may thus be determined at which distance the requirement of the insulating voltage being larger than the expected voltage difference is met.

In an embodiment, a spacing between the conductor bonding elements of the potential equalization assembly in longitudinal direction of the rotor blade is selected such that an insulating voltage between the conductive element and the carbon structure at each longitudinal position of the longitudinal section is larger than an expected voltage difference between the conductive element and the carbon structure at the respective longitudinal position due to a lightning strike to the conductive element. Thus, the potential between the conductive element and the carbon structure may be equalized more efficiently. By properly spacing the bonding elements in the longitudinal direction, a flashover between the conductive element and the carbon structure may be prevented.

In an embodiment, the conductive element is spaced apart from the carbon structure in the surface direction such that there is no overlap between the conductive element and the carbon structure in thickness direction perpendicular to the surface of the blade. As conductive element may not overlap with the carbon structure in the thickness direction, the risk of flashovers between the conductive element and the carbon structure may be reduced.

The conductive element may be arranged in chord direction between the carbon structure and a leading edge or trailing edge of the blade. The assembly may comprise a respective second conductive element arranged in chord direction between the carbon structure and the respective other of the leading edge or trailing edge of the blade.

In an embodiment, a layer of non-conductive shell material of a shell of the rotor blade is present in thickness direction between the carbon structure and the first and second conductive elements. The shell material of the wind turbine blade may provide an efficient insulation in the surface direction and the thickness direction. Also the integration of the lightning protection assembly into already existing rotor blade setups may be facilitated.

In an example, the layer of non-conductive shell material comprises one or more layers of fiberglass composite material (fiberglass layers). The number of layers of fiberglass composite material may be conveniently chosen to provide sufficient insulation in the thickness direction perpendicular to the surface of the blade.

Core material may be present adjacent the carbon structure on both sides thereof in surface direction. The fiberglass layers may cover completely or partially the carbon structure and the core material.

In an embodiment, the lightning protection assembly comprises at least one (metallic) lightning conductor, wherein the first and second conductor bonding elements of the potential equalization assembly are electrically connected to the at least one lightning conductor. The lightning conductor may be a down-conductor. It may be a single metallic down conductor or multiple pieces of metallic down conductor.

Using a lightning conductor may allow a more efficient down conduction of the lightning current when the conductive element is struck by lightning. As most wind turbines already feature a lightning conductor, such lightning conductor may be connected to the lightning protection assembly, so that integration of the lightning protection assembly into already existing lightning protection systems may be facilitated. Such arrangement may further allow the use of different types of bonding elements for providing the connection to the conductive elements (via the conductor bonding elements) and for providing the connection to the carbon structure (e.g. via carbon structure bonding elements).

In an embodiment, the lightning protection assembly may comprise two lightning conductors extending longitudinally along the carbon structure, wherein the lightning conductors may extend on the opposite sides (in surface direction) thereof. This may allow first and second conductive elements to be each coupled each to a different lightning conductor. Consequently, the lightning current may be down-conducted more efficiently.

In an embodiment, the lightning conductor may comprise a first section extending in a tip section of the blade and a second section extending in a root section of blade. The blade may comprise an intermediate section between the root section and the tip section. The lightning conductor may not extend in the intermediate section of the blade. The first section of the lightning conductor may be connected to the carbon structure and the second section of the lightning conductor may be connected to the carbon structure. The lightning current may then be conducted between the first section and the second section of the lightning conductor via the carbon structure. By not extending the lightning conductor in the intermediate section of the rotor blade, the integration of the lightning conductor into the lightning protection assembly may be facilitated, as the lightning conductor does not have to extend over the whole blade span. Furthermore, the cost of including a lightning conductor into the lightning protection assembly may be kept low. Optionally, only a separate section of lighting conductor may be present in the intermediate section and may be connected to the carbon structure. This may be beneficial if the conductive element starts in the intermediate section. In other implementations, the lightning conductor may extend from the tip section over the intermediate section to the root section.

At the root section, the lightning conductor may be connected to a grounding system of the wind turbine. The root section of the blade may for example include less than 25%, e.g. less than 20% or 15%, of the length of the blade measured from the root of the blade.

One or more lightning receptors may be electrically coupled to the lighting conductor. For example, one, two, or more lightning receptor may be provided at a tip and/or in a tip section of the blade, and one or more lighting conductors may optionally be provided in an intermediate section of the blade.

In an example, the distance of the first and second conductive elements to the carbon structure in the surface direction may be kept constant in the intermediate section of the blade. In another example, the distance of the first and second conductive elements to the carbon structure in the surface direction may be larger in the intermediate section of the blade than in the tip section of the blade. This may allow reducing the number of conductor bonding elements in the intermediate section of the blade, as the increased distance provides an increased insulation voltage. In some examples, no conductor bonding elements may be provided in the intermediate section of the blade.

In an embodiment, at least for a longitudinal section of the blade (e.g. a part of the intermediate section), the carbon structure is configured to act as a down conductor for a lightning current injected from the conductive element via the potential equalization assembly into the carbon structure. As the carbon structure may act as a down conductor, the length of the conductive element may be reduced considerably, and no separate down conductor may need to be provided in this region. This may further reduce the cost of the lighting protection assembly and simplify the installation.

In some embodiments, the longitudinal section of the conductive element may only extend in a tip section of the rotor blade or to a position in the intermediate section of the rotor blade (i.e. it may not extend to or in the root section of the blade). As the probability of a lightning strike is decreasing exponentially from the blade tip to the blade root of the wind turbine, the highest probability of a lightning strike may be found in the tip region of the wind turbine blade. Further, the shell of the rotor blade in the root and intermediate parts of the blade may comprise enough thickness such that insulation of the carbon structure may already be ensured by the non-conductive shell material. The carbon structure near the blade root and/or in the intermediate section may thus not require an additional lightning protection via the conductive element.

In an embodiment, the potential equalization assembly comprises one or more carbon structure bonding elements electrically connected to the carbon structure, wherein each of the first and second conductor bonding elements of the potential equalization assembly is electrically coupled to at least one of the carbon structure bonding elements. This may enhance the connection between the conductive element and the carbon structure through the respective bonding elements of the potential equalization assembly.

In an example with two conductive elements, only one potential equalization assembly may comprise the carbon structure bonding elements. A cost efficient solution may thus be provided. Preferably, each potential equalization assembly comprises respective carbon structure bonding elements. This may provide a more efficient potential equalization and may allow the use of separate lightning conductors.

In an embodiment, a lightning conductor may electrically couple each of the first and second conductor bonding elements to respective carbon structure bonding elements. The risk of flashovers may thereby be reduced.

In an embodiment, the one or more carbon structure bonding elements comprise at least one carbon structure bonding element that electrically connects a (chamfered or straight) end face of a tip end portion of the carbon structure, in particular of a pultruded carbon fiber plank thereof, to a lightning conductor of the lightning protection assembly and/or comprise at least one carbon structure bonding element that electrically connects a (chamfered or straight) end face of a root end portion of the carbon structure, in particular of a pultruded carbon fiber plank thereof, to a lightning conductor of the lightning protection assembly.

Preferably, if the carbon structure comprises a plurality of pultruded carbon fiber planks, at least one carbon structure bonding element may be used to electrically connect each layer of pultruded carbon fiber planks at the tip end and at the root end. This may allow potential equalization of every layer of the pultruded carbon fiber planks. Thus, damage due to potential differences and resulting flashover between the carbon fiber planks may be prevented.

According to another aspect of the present invention, a rotor blade of a wind turbine comprising a lightning protection assembly having any of the configurations described herein is provided.

In an embodiment, the lighting protection assembly of the rotor blade is a first lightning protection assembly having any of the configurations described herein arranged on a suction side of the rotor blade and the rotor blade further comprises a second lightning protection assembly having any of the configurations described herein arranged on a pressure side of the rotor blade. Since a lightning strike may occur on either side of the rotor blade, adding the lightning protection assembly on both sides of the rotor blade may prevent damage to either side. It also ensures that the lightning protection system may act as a Faraday cage for the whole rotor blade.

In an embodiment, the lightning protection assembly of the rotor blade may comprise a third potential equalization assembly, wherein the third potential equalization assembly is configured to establish an electrical connection between the conductive element of the first lightning protection assembly and a conductive element of the second lightning protection assembly. It may be further configured to establish an electrical connection between a second conductive element of the second lightning protection assembly and a second conductive element of the first lightning protection assembly. High energy lightning strikes or events with high current derivatives may cause flashovers between the respective carbon fiber elements of the first and second lightning protection assemblies. Equipotential bonding between the first and second lightning protection assemblies by means of the third equipotential bonding assembly may effectively prevent damage during these events.

In an embodiment, the third potential equalization assembly comprises one, two, three or more third conductor bonding elements that are (directly) electrically connected to the respective conductive elements of the respective first and second lightning protection assemblies.

In an embodiment, the longitudinal position of at least one third conductor bonding element along a longitudinal direction of the respective conductive element may coincide with the longitudinal position along the longitudinal direction of at least one conductor bonding element of the first potential equalization assembly and/or of the second potential equalization assembly of the first and/or second lightning protection assembly. This may allow a direct transition from the respective first and/or second potential equalization assembly to the third potential equalization assembly. In this way, an efficient integration of the third potential equalization assembly may be realized. In particular, the conductor bonding elements of two or three of the first, the second, and the third potential equalization assemblies at the same longitudinal position may be provided by a single conductor. The number of components may thus be reduced, and assembly during manufacturing may be facilitated.

According to another aspect of the present invention, a method of providing a lightning protection assembly for a rotor blade of a wind turbine is provided. The lightning protection assembly comprises a carbon structure extending in a longitudinal direction of the rotor blade for strengthening the rotor blade. The method comprises providing a conductive element, and electrically coupling first and second conductor bonding elements of a potential equalization assembly to the conductive element and to the carbon structure. A longitudinal section of the conductive element extends in a longitudinal direction of the blade between the first and second conductor bonding elements. Providing the conductive element comprises arranging the conductive element such that the longitudinal section of the conductive element extends in a longitudinal direction at least along a portion of the carbon structure. In a profile section of the rotor blade, the conductive element is spaced apart from the carbon structure in a surface direction parallel to a surface of the rotor blade and/or in a thickness direction perpendicular to the surface of the rotor blade. By such method, a lighting protection assembly having any of the advantages outlined above may be obtained.

The method may be performed so as to assemble a lightning protection assembly having any of the configurations disclosed herein. The method may comprise any of the assembly steps disclosed herein. Likewise, the lightning protection assembly may have any of the configurations resulting from the performing of any of the assembly methods disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a top view of a lightning protection assembly for a rotor blade of a wind turbine according to an embodiment.
Fig. 2 is a schematic drawing illustrating a cross section of a lightning protection assembly for a rotor blade of a wind turbine according to an embodiment.
Fig. 3 is a schematic drawing illustrating a carbon structure of a lightning protection assembly for a rotor blade of a wind turbine according to an embodiment.
Fig. 4 is a schematic drawing illustrating a profile of a rotor blade comprising a first lightning protection assembly on a suction side and a second lightning protection assembly on a pressure side.
Fig. 5 is a schematic drawing illustrating a top view of a lightning protection assembly of a rotor blade of a wind turbine according to an embodiment.
Fig. 6 is a schematic drawing illustrating a top view of a lightning protection assembly for a rotor blade of a wind turbine according to an embodiment.
Fig. 7 is a schematic drawing illustrating a top view of a lightning protection assembly for a rotor blade of a wind turbine according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

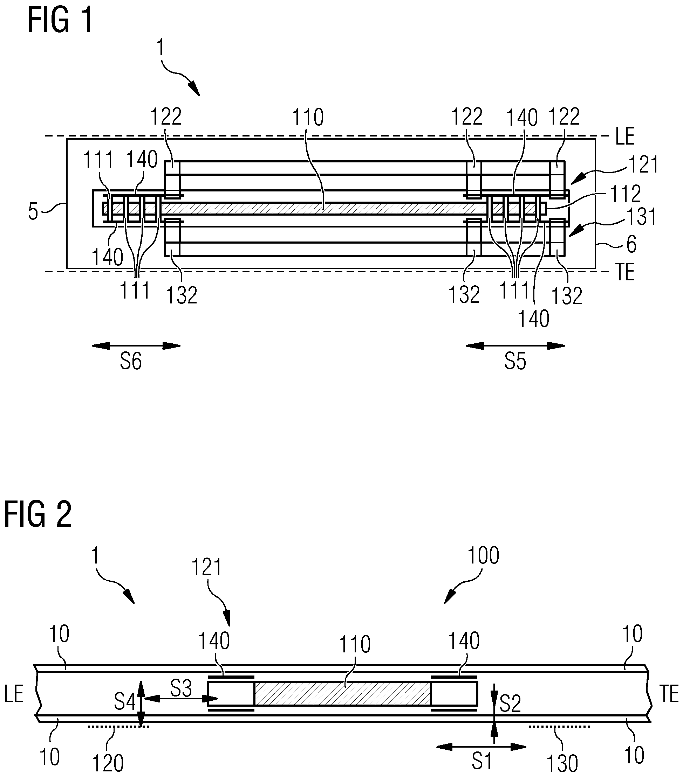

Fig. 1 schematically illustrates a top view of a rotor blade 1 of a wind turbine having a lightning protection assembly 100. For the sake of simplicity, the rotor blade 1 in Fig. 1 is schematically shown as a rectangle. The rotor blade 1 may however have any known shape used with real rotor blades. In particular, the rotor blade 1 may be also tapered at the tip end of the blade. LE indicates the leading edge and TE indicates the trailing edge of blade 1. The lightning protection assembly comprises a carbon structure 110 extending in a longitudinal direction of the rotor blade 1 for strengthening the rotor blade. The carbon structure 110 is or may comprise a beam, e.g. a spar cap or a spar. The lightning protection assembly further comprises first and second conductive elements 120, 130 and first and second potential equalization assemblies 121, 131. Each potential equalization 121, 131 assembly may comprise at least two conductor bonding elements 122, 132. The conductor bonding elements 122, 132 may be configured to electrically couple the respective first and second conductive elements 120, 130 to the carbon structure 110. Preferably, a conductor bonding element is provided at each longitudinal end of the conductive element 120, 130. As can be seen, the first and second conductive elements have respective first and second longitudinal sections that extends in longitudinal direction along the carbon structure 110, which is arranged in surface direction between the conductive elements 120, 130. The providing of the first and/or second conductive elements 120, 130 may increase the likelihood that lightning will strike them rather than the carbon structure 110.

To provide potential equalization between the carbon structure 110 and the conductive elements 120, 130, first and second potential equalization assemblies 121, 131 are used to establish an electrical connection between the components via the first and second conductor bonding elements 122, 132. Thus, the risk of flashovers from the conductive elements 120, 130 to the carbon structure may be reduced.

As shown in Fig. 1, the portion of the carbon structure 110 along which the first and second longitudinal sections at least extend may be a tip end portion S5 having a tip end 112 that is directed towards a tip of the rotor blade 1. By extending the first and second section of the respective conductive elements over at least the tip end portion S5 of the carbon structure 110, the most vulnerable region at the tip end 112, at which the possibility of a lightning strike is high, may be protected from direct lightning strikes.

Preferably and as shown in Fig. 1, the first and second conductive elements may extend longer than the tip end 112 of the carbon structure 110. The distance between the tip end of the carbon structure and the tip end of the first and second longitudinal sections may be 1-5 m.

The first and second conductive elements 120, 130 may comprise a metal mesh, e.g. a copper mesh. The metal mesh may comprise a thickness between 0.1 mm and 0.4 mm with a width between 50 mm and 250 mm. Furthermore, the metal mesh may comprise a cross section between 25 mm² and 50 mm².

The conductive elements 120, 130 may be placed closer to the outer surface of the blade than the carbon structure 110. As an example, the conductive element 120, 130 may be placed above the outermost fiberglass layer of the shell. In other examples, the conductive element 120, 130 may be embedded in the shell structure 10, e.g. below a resin layer or below a fiberglass layer. The conductive element 120, 130 may be included in the assembly during half-shell or complete blade assembly.

The first and second conductor bonding elements 122, 132 of the corresponding potential equalization assemblies 121, 131 may comprise a metal mesh, e.g. a copper mesh. The metal mesh may comprise a thickness between 0.1 mm and 0.4 mm with a width between 50 mm and 250 mm. Furthermore, the metal mesh may comprise a cross section between 25 mm² and 50 mm². The conductor bonding elements 122, 132 of the respective conductive elements 120, 130 may extend perpendicular to the carbon structure 110. Further, the mounting position of the conductor bonding elements 122 of the first conductive member 120 may be opposite to the mounting position of the conductor bonding elements 132 of the second conductive member 130.

The lightning protection assembly 100 comprises at least one lightning conductor 140, wherein the first and second conductor bonding elements 122, 132 of the first and/or second potential equalization assemblies 121, 131 are electrically connected to the at least one lightning conductor 140. In the example of Fig. 1, the lightning protection assembly 100 has two lightning conductors 140, which extend on opposite sides along the carbon structure 110. The bonding elements 122, 132 of the respective potential equalization assemblies 121, 131 are electrically connected to the lighting conductor 140 extending on the side of the carbon structure 110 on which the respective conductive elements 120, 130 are disposed (in surface direction S1). The required length of the bonding elements 122, 132 may thus be reduced and assembly may be facilitated. This may further make the potential equalization between the carbon structure 110 and the conductive elements 120, 130 more efficient.

In the present example, each lightning conductor 140 has first section extending in the tip section of the blade 1 and a second section extending in the root section of the blade 1. In the intermediate section between the first and second sections, the lightning current may be conducted via the carbon structure 110 and optionally via the parallel conductive element(s).

To collect the down conducted current of the conductive elements 120, 130 and the carbon structure 110, these elements may be connected to the second (root) section of the lightning conductor 140 via the potential equalization assemblies 122, 132. The lightning conductor(s) may be grounded at the blade root end. The lightning conductors 140, and optionally the potential equalization assemblies 122, 132, may not be present in the intermediate section (the section between root end portion S6 and tip end portion S5). The lightning current in this section may then be conducted via the carbon structure 110 itself.

It is further shown in Fig. 1 that the first and/or second potential equalization assemblies 121, 131 may comprise one or more carbon structure bonding elements 111 electrically connected to the carbon structure 110. Each of the first and second conductor bonding elements 122, 132 of the respective potential equalization assembly 121, 131 may be electrically coupled to at least one of the carbon structure bonding elements 111. Additional carbon structure bonding elements 111 may ensure a better transition between the material properties of the conductor bonding elements 122, 132 and the carbon structure 110. Thus, a better electrical connection between the conductor bonding elements 122, 132 and the carbon structure 110 may be established.

Two, three, four or more carbon structure bonding elements 111 may be used to connect each of the tip end portion S5 and the root end portion S6 of the carbon structure 110 to a lightning conductor 140 of the lightning protection assembly.

Figure 2 shows schematically a part of a cross section through the blade 1 of Fig. 1 (in particular part of a profile of the blade) at either the root section or the tip section of the blade where the lightning conductor 140 extends along the carbon structure 110. In the profile section, each of the first and second conductive elements 120, 130 may be spaced apart from the carbon structure 110 in the surface direction S1 (lying in the profile plane) and/or in a thickness direction S2 perpendicular to the surface of the blade 1. As visible in Figs. 1 and 2, the spacing is such that there is no overlap between the first and second conductive elements 120, 130 and the carbon structure 110 in thickness direction S2. By providing a spacing of the conductive elements 120, 130 in the surface and the thickness directions to the carbon structure, an increased insulation voltage may be achieved so that a flashover or arcing between the respective conductive element and the carbon structure may be prevented.

In the spacing S2 in the thickness direction perpendicular to the surface of the blade 1, a layer of non-conductive shell material of a shell 10 of the rotor blade 1 may be present between the carbon structure 110 and the first and second conductive elements 120, 130. The layer of non-conductive shell material may comprise one or more layers of fiberglass composite material as well as core material of the rotor blade made of foam or balsa wood. A good electrical insulation may thus be achieved in the parts in which no conductor bonding elements 122, 132 are present.

The first and second conductive elements 120, 130 have in a cross section (in particular in the profile section) comprising the carbon structure 110 a minimum distance S1 to the carbon structure 110. The minimum distance S1 is selected such that an insulating voltage between the respective conductive element 120, 130 and the carbon structure 110 is, for each position along the conductive elements, higher than an expected voltage difference between the respective conductive element 120, 130 and the carbon structure 110 due to a lightning strike to the respective conductive element 120, 130. The expected voltage may be determined by modelling the wind turbine with the rotor blade including the lightning protection assembly and applying lightning strikes expected at the wind turbine site in the model. As another example, a lightning protection standard, such as LPL 1 lightning current parameters, may be used for determining the expected voltage. Flashovers may thus efficiently be prevented.

Fig. 2 shows a blade profile part at a longitudinal position at which the lightning conductors 140 are present. In other examples, only single lightning conductor or a lighting conductor that extends along the whole length of carbon structure 140 may be provided. The insulation voltage of the conductive element 120 to the lightning conductor 140 is determined by distance S3 in surface (or chord) direction and distance S4 in thickness direction. The insulation voltage of the conductive element 120 to the carbon structure 110 is determined by the distance S1 in surface direction (or chord direction) and distance S2 in thickness direction. This applies correspondingly for element 130.

The shell may have dielectric strength DS₁ along its external surface in direction of distance S1 and DS₃ in direction of distance S3, which may for example be about 0.5 kV/mm. DS₂ is a dielectric strength in direction of distance S2 across the fiberglass layers of the shell 10, which may have a value between 15 and 20 kV/mm. DS₄ is a dielectric strength in direction of distance S4 across the fiberglass layers and core material of the shell 10.

In the example of Fig. 1, in the root end portion S6, the insulation voltage between the conductive element 120, 130 and the carbon structure 110 may be given by IV₁= S1*DS₁+S2*DS₂ (first insulation voltage). In the tip end portion S5, the insulation voltage is given by IV₁ and by a second insulation voltage IV₂= S3*DS₃+S4*DS4 between the conductive element 120, 130 and the lighting conductor 140. In this portion S5, the insulation voltage may correspond to the lower value of the first insulation voltage IV₁ and the second insulation voltage IV₂.

The distances S1 and S2 as well as the spacing in longitudinal direction between the conductor bonding elements 122, 132 may be chosen such that at any longitudinal position along the blade, the insulation voltage IV is larger than a voltage difference between the respective conductive element 120, 130 and the carbon structure 110 and/or down conductor 140. This may mean that in portion S6, IV₁ > Voltage difference V_{(120/130)-(110)} between element 120, 130 and structure 110 at the same longitudinal position for all longitudinal positions in region S6. This may further mean that in region S5, IV₁ > V_{(120/130)-(110)} and IV₂ > Voltage difference V_{(120/130)-(140)} between element 120, 130 and lightning conductor 140 at the same longitudinal position for all longitudinal positions in portion S6.

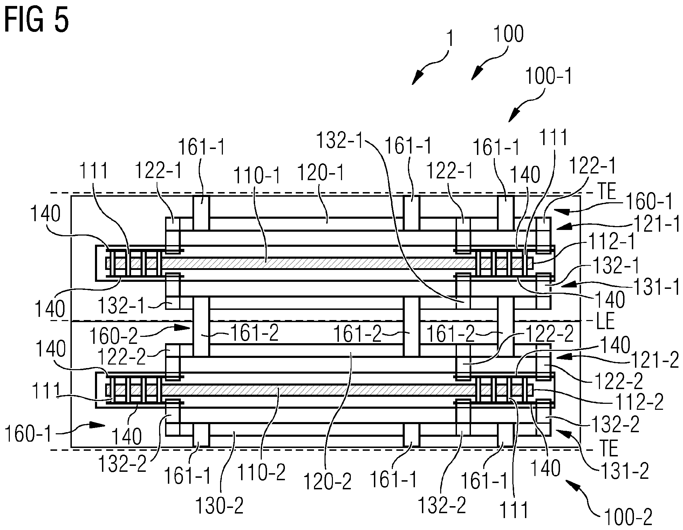

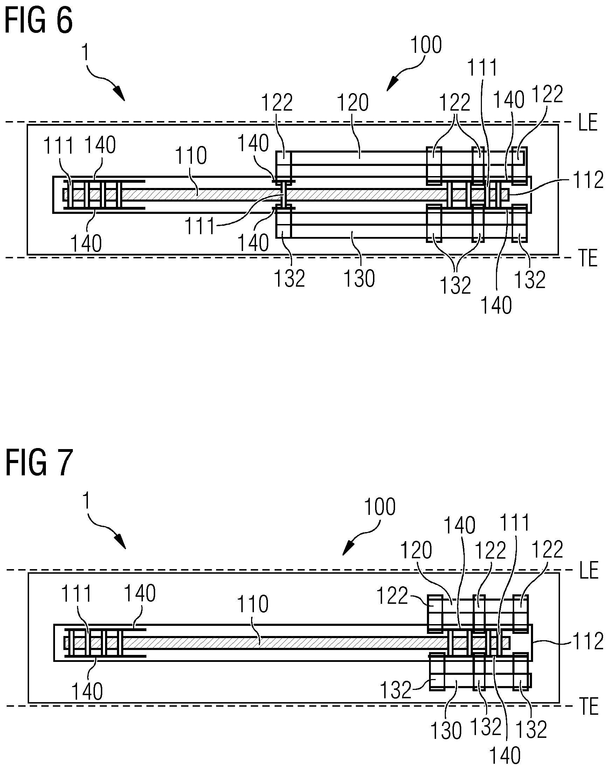

In the intermediate section between root end portion S6 and tip end portion S5, the voltage difference V_{(120/130)-(110)} may always be rather low, due to the electrical connection between the elements 120, 130 and lighting conductor 140 by means of conductor bonding elements 122, 132, which may be provided at the end of portion S6 and the start of portion S5 (seen in longitudinal direction towards the blade tip). In portion S5, the condition IV₂ > V_{(120/130)-(140)} may be more difficult to fulfill between the two conductor bonding elements 122 or 132 present at the start and the end of this portion S5. To meet the condition, one or more additional conductor bonding elements 122, 132 may be installed in portion S5 between the ones shown in Fig. 1. An example of such configuration is shown in Figs. 5 and 6.

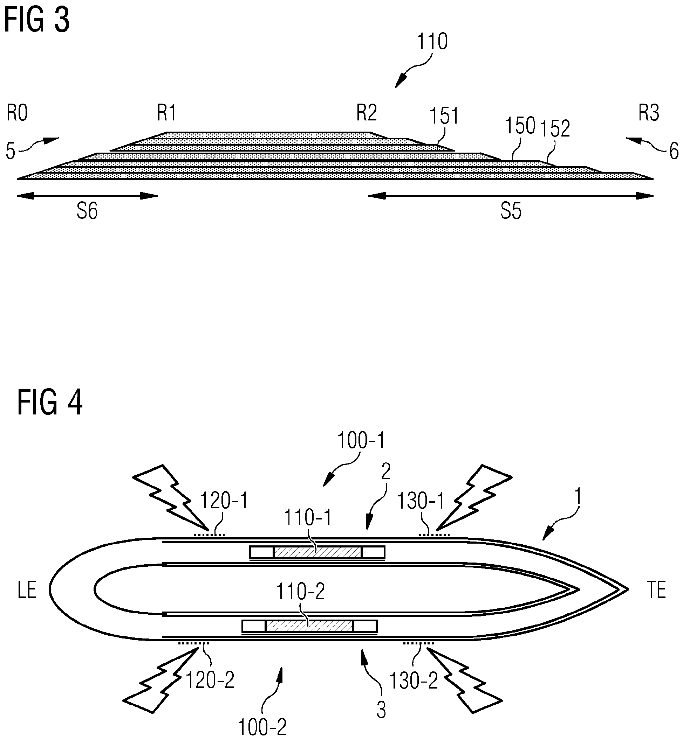

Fig. 3 schematically illustrates a carbon structure 110. In this case, the carbon structure 110 is a beam, in particular a carbon spar cap 150. The carbon spar cap 150 comprises a stack of pultruded carbon fiber planks 151 forming the carbon spar cap 150. The carbon spar cap 150 comprises the blade root portion S6, which extends from a blade root end R0 in proximity to the blade root of the rotor blade 1 to a first distance R1 from the blade root end. The carbon spar cap 150 comprises a number of layers of pultruded carbon fiber planks 151. The number of layers increases from the blade root end R0 to R1. Carbon spar cap 150 further comprises a second (intermediate) section comprising a constant number of layers of pultruded carbon fiber planks 151 between the first distance R1 and a second distance R2 from the blade root end.

The carbon spar cap 150 further includes the tip end portion S5 that extends from the second distance R2 to the tip end R3. The tip end portion S5 comprising a decreasing number of layers of pultruded carbon fiber planks 151. Accordingly, the tip end and/or the root end of the carbon spar cap 150 and thus of the carbon structure 110 may be tapered. R1 may be located at the end of the tapered section at the root end and R2 may be located at the start of the tapered section at the tip end (as seen in longitudinal direction towards the tip).

Some or all ends of the pultruded carbon fiber planks 151 in the blade root section S6 and the blade tip end portion S5 may be chamfered.

The length of portion S5 may be larger than length of portion S6.

The conductive elements 120, 130 may start at a distance R from the blade root, wherein R may lie between the first distance R1 and the second distance R2 from the blade root end. The conductive elements 120, 130 may extend in longitudinal direction at least up to the position R3 and preferably beyond position R3, preferably by 1-5 m, e.g. by (at most) 3 m. The conductive elements 120, 130 may extend with a minimum distance S1 in the surface direction (substantially) parallel to the carbon spar cap 150. The potential equalization assemblies 121, 131 may have a conductor bonding element connecting the respective conductive element 120, 130 to the lighting conductor 140 at least at the distances R2 and R3, and optionally at R (if R<R2), for example at R1 if the elements 120, 130 start at R1 (e.g., each position ±1 m).

The first section of the lightning conductor 140 may extend (at least) from R0 to R1 (±1 m) and the second section of the lighting conductor 140 may extend (at least) from R2 to R3 (±1 meter, +3/-1 m for R3).

The carbon structure bonding elements 111 may provide multiple electrical connections between the carbon spar cap 150 and the lightning conductor 140 in the region between R0 and R1 and in the region between R2 and R3, preferably only in these regions. In other words, carbon structure bonding elements 111 may only be provided at the tapered portions of the carbon structure 110 where end faces of pultruded carbon planks can be contacted.

Preferably, at least one carbon structure bonding element 111 may be used to electrically connect each layer of pultruded carbon fiber planks 151 at the tip end 112 and at the root end. This may allow equalization of every layer of the pultruded carbon fiber planks 151.

Carbon structure bonding elements 111 may comprise or consist of carbon fibers; a carbon fiber mesh or fabric may for example be used.

Fig. 4 shows a lighting protection assembly comprising a first lightning protection assembly 100-1 arranged on a suction side 2 of the rotor blade 1 and a second lightning protection assembly 100-2 arranged on a pressure side 3 of the rotor blade 1. As can be seen, a lightning strike may occur on either side of the rotor blade. The first and second lightning protection assemblies may form a Faraday cage around the carbon structures 110-1, 110-2, and the lightning may be attracted to the respective conductive elements of the lightning protection assemblies. Accordingly, damage of both the suction side 2 and the pressure side 3 of the rotor blade due to direct lightning strike of the carbon fiber elements 110-1, 110-2 may be prevented effectively.

Fig. 5 schematically illustrates a lightning protection assembly of a rotor blade comprising a first lightning protection assembly 100-1 on the suction side 2 of the wind turbine and a second lightning protection assembly 100-2 on the pressure side 3 of the wind turbine, similar to Fig. 4. In order to establish an equipotential bonding between the conductive elements 120, 130 of the respective lightning protection assembly 100-1, 100-2, the first and/or second lightning protection assembly comprises a third potential equalization assembly 160. High energy lightning strikes or events with high current derivatives may cause flashovers between the respective carbon fiber elements of the first and second lightning protection assemblies. Equipotential bonding between the first and second lightning protection assemblies by means of a third equipotential bonding assembly 160 may reduce the voltage difference that can build up between these elements and may thus reduce the risk of flashovers, thus effectively preventing damage during these events.

In the present example, the blade comprises two third potential equalization assemblies 160-1, 160-2. Third conductor bonding elements 161-2 of the potential equalization assembly 160-2 electrically bond the conductive element 120-2 of the second lightning protection assembly 100-2 and the second conductive element 130-1 of the first lightning protection assembly 100-1; bonding elements 161-2 may provide a direct electrical connection. Similarly, third conductor bonding elements 161-1 of the potential equalization assembly 160-1 bond the conductive element 120-1 of the first lightning protection assembly 100-1 to the second conductive element 130-2 of the second lightning protection assembly 100-2; bonding elements 161-1 may provide a direct electrical connection.

Each third potential equalization unit 160 may comprise a single third conductor bonding element 161. The third potential equalization unit may also comprise more than one third conductor bonding element 161, e.g. 2, 3, 4, or more conductor bonding elements 161. The third conductor bonding elements 161 may comprise a metal mesh, e.g. a copper mesh. The metal mesh may comprise a thickness between 0.1 mm and 0.4 mm with a width between 50 mm and 250 mm. Furthermore, the metal mesh may comprise a cross section between 25 mm² and 50 mm².

In the present illustration, each of the first and second third potential equalization assemblies 160-1, 160-2 comprises three conductor bonding elements 161-1, 161-2. Furthermore, the longitudinal positions of the third conductor bonding elements 161 along the longitudinal sections of the respective conductive elements 120, 130 do not coincide with the longitudinal positions of the bonding elements 122, 132 of the potential equalization assemblies 121-1, 131-1 and the potential equalization assemblies 121-2, 131-2 of the respective first and second lightning protection assemblies 100-1, 100-2. The bonding elements 161-1, 161-2 of the respective two third potential equalization assemblies 160-1, 160-2 may be installed at any suitable longitudinal positions along the longitudinal sections of the conductive elements 120, 130 such that the desired potential equalization between assemblies 100-1, 100-2 is achieved. In other implementations, the longitudinal positions of some or of all the conductor bonding elements 161-1, 161-2 may coincide with the longitudinal positions of the conductor bonding elements 122-1, 132-1; 122-2, 132-2. In even further embodiments, a single conductor may implement two or more conductor bonding elements 161, 122, and/or 132 located at the same longitudinal position. Two or more conductor bonding elements (e.g. 161-1 and 122-1) of different potential equalization assemblies may be provided as a single conductor, e.g. metal mesh. In other examples, a conductor bonding element of each potential equalization assembly 121, 131, 161 (e.g. 122-1, 161-1 and 132-2) may be implemented by a single conductor. This may apply for some of the conductor bonding elements 122, 132, 161 or for all conductor bonding elements. It should further be clear that the above applies correspondingly if one or each of the first and second lightning protection assemblies comprises only a single conductive element 120 or 130.

Fig. 6 and Fig. 7 schematically illustrate a lightning protection assembly in which the first and second conductive elements 120, 130 do not extend up to the root end portion S6 of the carbon structure 110. In such implementation, at least for a longitudinal section of the blade 1, the carbon structure 110 is configured to act as a down conductor for a lightning current injected from the first and/or second conductive elements 120, 130 via the respective potential equalization assembly 121, 131 into the carbon structure 110. The integration into a rotor blade may thereby be facilitated and the cost of including the lighting protection assembly 100 into the rotor blade 1 may be reduced. Alternatively, the lighting conductor 140 may not be sectioned but may extend continuously towards the root of the blade. Lightning currents may then mainly be conducted in the lightning conductor 140.

Fig. 6 shows a lightning protection assembly in which the first and second conductive elements 120, 130 in the respective first and second longitudinal section only extend to a position in the intermediate section of the rotor blade 1. The shell 10 of the rotor blade 1 in the intermediate part of the wind turbine 1 may benefit from a reduced probability of lightning strike and may comprise enough thickness such that insulation of the carbon structure 110 may already be ensured by the non-conductive shell material. This may mean that the carbon structure 110 near the blade root may not require an additional lightning protection via the conductive elements 120, 130. As can be seen, both ends of the first and second conductive elements 120, 130 are connected via respective bonding elements 122, 132 to a respective section of the lightning conductor 140, which in turn is connected by carbon structure bonding elements 111 to the structure 110. An additional section of lighting conductor 140 and additional carbon structure bonding elements 111 may thus be provided in the intermediate section of lightning conductor 140. In the tip region S5, an additional bonding element 122, 132 is provided, which provides potential equalization and thus reduced the expected voltage difference. This may allow using a smaller distance S1 in surface direction. The addition of this third conductor bonding element or even more in the tip region is optional.

Fig. 7 shows a lightning protection assembly in which the first and second conductive elements 120, 130 in the first and second longitudinal sections only extend in the tip end portion S5 of the carbon structure 110, for example only in a tip section of the blade. As the probability of a lightning strike is decreasing exponentially from the blade tip to the blade root of the wind turbine 1, the highest probability of a lightning strike may be found in the tip region of the wind turbine blade. Consequently, it may be also possible to employ the conductive elements 120, 130 of the lightning protection assembly 100 only in the tip section of the rotor blade while providing adequate protection.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A lightning protection assembly for a rotor blade (1) of a wind turbine, wherein the lightning protection assembly (100) comprises:
- a carbon structure (110) extending in a longitudinal direction of the rotor blade (1) for strengthening the rotor blade (1);
- a conductive element (120, 130); and
- a potential equalization assembly (121, 131) comprising at least respective first and second conductor bonding elements (122, 132) each configured to electrically couple the conductive element (120, 130) to the carbon structure (110), wherein a longitudinal section of the conductive element (120, 130) extends in a longitudinal direction of the blade (1) between the first and second conductor bonding elements (122, 132),
wherein the longitudinal section of the conductive element (120, 130) extends in a longitudinal direction along at least a portion of the carbon structure (110),
wherein, in a profile section of the rotor blade (1), the conductive element (120, 130) is configured to be spaced apart from the carbon structure (110) in a surface direction (S1) parallel to a surface of the rotor blade (1) and/or in a thickness direction (S2) perpendicular to the surface of the rotor blade (1).

2. The lightning protection assembly according to claim 1, further comprising:
- a second conductive element (130); and
- a second potential equalization assembly (131) comprising at least respective first and second conductor bonding elements (132) configured to electrically couple the second conductive element (130) to the carbon structure (110), wherein a second longitudinal section of the second conductive element (130) extends in a longitudinal direction of the blade (1) between the first and second conductor bonding elements (132),
wherein the second longitudinal section of the second conductive element (130) is extending in the longitudinal direction at least along the same portion of the carbon structure (110) as the first longitudinal section, wherein the first longitudinal section and the second longitudinal section are spaced apart in the surface direction and the carbon structure (110) is in surface direction arranged between the first and second longitudinal sections,
wherein the second conductive element (130) is spaced apart from the carbon structure (110) in the surface direction (S1) and/or in the thickness direction (S2).

3. The lightning protection assembly according to claim 1 or 2, wherein the carbon structure (110) is or comprises a beam, in particular a carbon spar cap or a spar.

4. The lightning protection assembly according to any of the preceding claims, wherein the portion of the carbon structure (110) along which the longitudinal section at least extends is a tip end portion having a tip end that is directed towards a tip of the rotor blade (1).

5. The lightning protection assembly according to any of the preceding claims, wherein the potential equalization assembly comprises at least three conductor bonding elements (122, 132) in a tip section of the blade (1) that includes a tip end portion of the carbon structure (110).

6. The lightning protection assembly according to any of the preceding claims, wherein the carbon structure (110) comprises a tapered portion at a tip end, wherein the longitudinal section extends at least along the tapered portion of the carbon structure (110).

7. The lightning protection assembly according to any of the preceding claims, wherein at each longitudinal position of the longitudinal section of the conductive element (120, 130), the conductive element (120, 130) has a minimum distance to the carbon structure (110), wherein the minimum distance is selected such that an insulating voltage between the conductive element (120, 130) and the carbon structure (110) is higher than an expected voltage difference at the longitudinal position between the conductive element (120, 130) and the carbon structure (110) due to a lightning strike to the conductive element (120, 130).

8. The lightning protection assembly according to any of the preceding claims, wherein a spacing between the conductor bonding elements (122, 132) of the potential equalization assembly (121, 131) in longitudinal direction of the rotor blade (1) is selected such that an insulating voltage between the conductive element (120, 130) and the carbon structure (110) at each longitudinal position of the longitudinal section of the conductive element (120, 130) is larger than an expected voltage difference at the longitudinal position between the conductive element (120, 130) and the carbon structure (110) due to a lightning strike to the conductive element (120, 130).

9. The lightning protection assembly according to any of the preceding claims, wherein a layer of non-conductive shell material of a shell (10) of the rotor blade (1) is present in the thickness direction (S2) between the carbon structure (110) and the conductive element (120, 130).

10. The lightning protection assembly according to any of the preceding claims, wherein the lightning protection assembly (100) comprises at least one lightning conductor (140), wherein the first and second conductor bonding elements (122, 132) of the potential equalization assembly (121, 131) are electrically connected to the at least one lightning conductor (140).

11. The lightning protection assembly according to any of the preceding claims, wherein at least for a longitudinal section of the blade (1), the carbon structure (110) is configured to act as a down conductor for a lightning current injected from the conductive element (120, 130) via the potential equalization assembly (121, 131) into the carbon structure (110).

12. The lightning protection assembly according to any of the preceding claims, wherein the potential equalization assembly (121, 131) comprises at least one carbon structure bonding element (111) that electrically connects an end face of a tip end portion (S5) of the carbon structure (110) to a lightning conductor (140) of the lightning protection assembly (100) and/or comprises at least one carbon structure bonding element (111) that electrically connects an end face of a root end portion (S6) of the carbon structure (110) to a lightning conductor (140) of the lightning protection assembly (100).

13. A rotor blade of a wind turbine comprising a lightning protection assembly according to any of claims 1 - 12.

14. The rotor blade according to claim 13, wherein the lighting protection assembly is a first lightning protection assembly (100) arranged on a suction side (2) of the rotor blade (1) and the rotor blade further comprises a second lightning protection assembly (100) according to any of claims 1-12 arranged on a pressure side (3) of the rotor blade (1).

15. A method of providing a lightning protection assembly for a rotor blade of a wind turbine, wherein the lightning protection assembly (100) comprises a carbon structure (110) extending in a longitudinal direction of the rotor blade (1) for strengthening the rotor blade (1), wherein the method comprises:
- providing a conductive element (120); and
- electrically coupling first and second conductor bonding elements (122) of a potential equalization assembly (121) to the conductive element (120) and to the carbon structure (110), wherein a longitudinal section of the conductive element (110) extends in a longitudinal direction of the blade (1) between the first and second conductor bonding elements (122);
wherein providing the conductive element comprises arranging the conductive element such that the longitudinal section of the conductive element (120) extends in a longitudinal direction at least along a portion of the carbon structure (110),
wherein, in a profile section of the rotor blade (1), the conductive element (120, 130) is spaced apart from the carbon structure (110) in a surface direction (S1) parallel to a surface of the rotor blade (1) and/or in a thickness direction (S2) perpendicular to the surface of the rotor blade (1).
